# EUROPEAN PATENT APPLICATION

(11) **EP 2 947 360 A1**
(43) Date of publication of application: **25.11.2015**
(21) Application number: 15168509.6
(22) Date of filing: 20.05.2015
(51) Int. Cl.: F16K 11/22, F16K 11/044, F16K 27/00

(54) **MODULAR VALVE SYSTEM**

(30) Priority: 21.05.2014 DE 202014102389 U
(71) Applicant: Johnson Electric S.A., 3280 Murten (CH)
(72) Inventor: Schaefer, Simone, Hong Kong (HK); Fraulob, Sebastian, Hong Kong (HK)
(74) Representative: Hocking, Adrian Niall

(57) **Abstract**

A modular valve system is configured as a multi-way valve (9) having a valve body (1) and at least four ports (2) for switching over between or mixing fluids. At least two valve cores (3) are arranged in the valve body (1). Each valve core (3) has at least one linear actuator (4) and one axially sealing seal element (5) movable by the actuator between two corresponding axially spaced seal seats (8). The valve system may be made modular by dividing the valve body (1) into modular sections with each section having one valve core.

## Description

### FIELD OF THE INVENTION

This invention relates to a modular valve system and in particular, to a valve system for heating, ventilating or cooling systems.

### BACKGROUND OF THE INVENTION

Multi-way mixing valves which are capable of connecting several inlets and outlets are already known. For example, DE 602 04 186 T2 describes a mixing valve where the respective inlet ports and outlet ports are connected to or separated from one another by means of a variable partition and, furthermore, mixing is made possible. Here, the partition is a spool in a rotationally symmetrical configuration arranged at the cross point of four ports. The respective valve adjustments are made and the desired connections are obtained by changing the angular position of the partition.

JP 11044369 A describes a motor-driven 4-way valve where connections between external ports are made within the valve by means of a rotatable valve cap. Therefore, the valve cap has appropriate channels which unblock said connections depending on the angular position of a disc.

Heating waters are generally very heavily contaminated such as by magnetite, sealing compounds and sand as well as by special additives such as anti-frost and anticorrosion agents, which may lead to considerable deposits. The disadvantage of the prior art is that these deposits or the contaminations contained in the circulated heating waters put stronger stress on tangential sealing systems, thus causing increased wear and finally resulting in a short lifetime. Furthermore, the functionality is limited since the number of possible connection combinations or mixing combinations per valve is limited. The inlet ports and the outlet ports of known valve systems cannot be connected freely irrespective of the port.

JP 63023074 A and JP 2004125238 A each disclose a 4-way switching valve where a bowl-shaped valve element is arranged to be slidable between two ports by means of a hydraulic piston or pneumatic piston and thus to connect said two ports while the remaining two ports are connected via the housing. Here, intermediate positions of the valve element are possible. Since, on the one hand, the heating water is heavily contaminated and furthermore contains additives resulting in deposits, the disadvantage of these solutions is also that, due to the linear movement of the valve element, the seals used are highly stressed tangentially and thus subjected to steady increased wear.

Furthermore, the above solutions contain a plurality of individual components to be mounted and maintained at some expense.

### SUMMARY OF THE INVENTION

Hence there is a desire for a valve system that addresses at least one of the disadvantages described above. Certain embodiments provide a valve system which can be made modular so that the valve system is freely scalable, to require only little space and to be insensitive to contaminations contained in the respective medium.

Accordingly, in one aspect thereof, the present invention provides a modular valve system configured as a multi-way valve having a valve body and at least four ports for switching over between or mixing fluids, wherein at least two valve cores are arranged in the valve body; and each valve core has at least one linear actuator (4) and one axially sealing seal element.

This allows the valve system to be used and operated universally as a multi-way valve because any switching states and connections states can easily be produced. It is an advantage that the seal element of the linearly acting valve cores is configured to be pushable and/or pressable onto the respective seal seat at the respective end position. This achieves a reliable and permanent sealing effect. By the mode of action of the axial sealing and the linear direction of operation of the seal element, there is maximum independence of contaminations. Furthermore, it is advantageous that the number of ports is scalable. By scaling, the 4-way valve system can be easily extended to a multi-way system of more than four ports.

A modular valve system can be provided with an advantageous enhancement by forming the valve body of separable, modularly extensible, adjustable and/or, relative to one another, rotatable individual components and can therefore be individually spatially arranged and adapted to the respective needs. Furthermore, this construction allows free scaling of the valve system by adding any number of further ports if need be and thus the number of ports and possible switching states can be varied considerably.

Alternatively, the valve body is configured as an inseparable valve body. This results in advantages with regard to stability. Furthermore, if necessary, a one-piece and compact construction is also possible.

A further advantageous enhancement is when switch-over operation and/or an infinitely variably mixing function are adjustable by the seal elements. Thereby, said modes of operation can be implemented immediately and also simultaneously, which means a high degree of flexibility. Thus, all necessary operating states can be adjusted almost without restrictions, achieving the required flow quantities or flow conditions and thus making an infinitely variable mixing operation possible.

Preferably, the ports are freely controllable as inlets and/or outlets in their function and flow direction. This allows the respective ports to be operated as inlet ports or outlet ports, depending on the need. How the respective ports are defined solely results from the respective periphery, whether a port shall be an inlet port or an outlet port. So, when needed, it is even possible by appropriate positioning of the seal elements to change the function of a port defined as inlet port into an outlet port if the direction reversal is important for, e.g., maintenance cases. This is an essential advantage over other known valve systems, since back flushing of the connected lines or devices are thereby possible without problems.

Preferably, the seal element is elastically deformable. This improves the functioning of the valve system since additional switching states and mixing ratios can be adjusted. Thus, the cross section and the thickness of the seal element can be adjusted, whereby, besides the ports, transitions to further ports can be sealed or at least varied in their cross section. Thus, inter alia, the passage opening in flow-through operation can additionally be easily adapted to desired flow quantities by changing the extension of the seal element, thus unblocking a larger or a smaller cross section. This elastic deformation can be influenced as a function of temperature and in a given spatial direction, thereby increasing the overall flexibility of the valve system considerably.

### BRIEF DESCRIPTION OF THE DRAWINGS

A preferred embodiment of the invention will now be described, by way of example only, with reference to figures of the accompanying drawings. In the figures, identical structures, elements or parts that appear in more than one figure are generally labelled with a same reference numeral in all the figures in which they appear. Dimensions of components and features shown in the figures are generally chosen for convenience and clarity of presentation and are not necessarily shown to scale. The figures are listed below.
Fig. 1 is an exploded view of a modular 4-way valve system including a valve body and a valve core;
Fig. 2 is a spatial view of the modular 4-way valve system of Fig. 1, with the valve core inserted into the valve body;
Fig. 3 shows the valve body of the 4-way valve;
Fig. 4 shows a valve body of a 6-way valve;
Figs. 5 to 8 each show a sectional view of the 4-way valve with fluid flow courses in switch-over operation; and
Fig. 9 shows a sectional view of the 4-way valve with fluid flow courses in mixing operation.

### DETAILED DESCRIPTION OF THE PREFERRED EMBODIMENTS

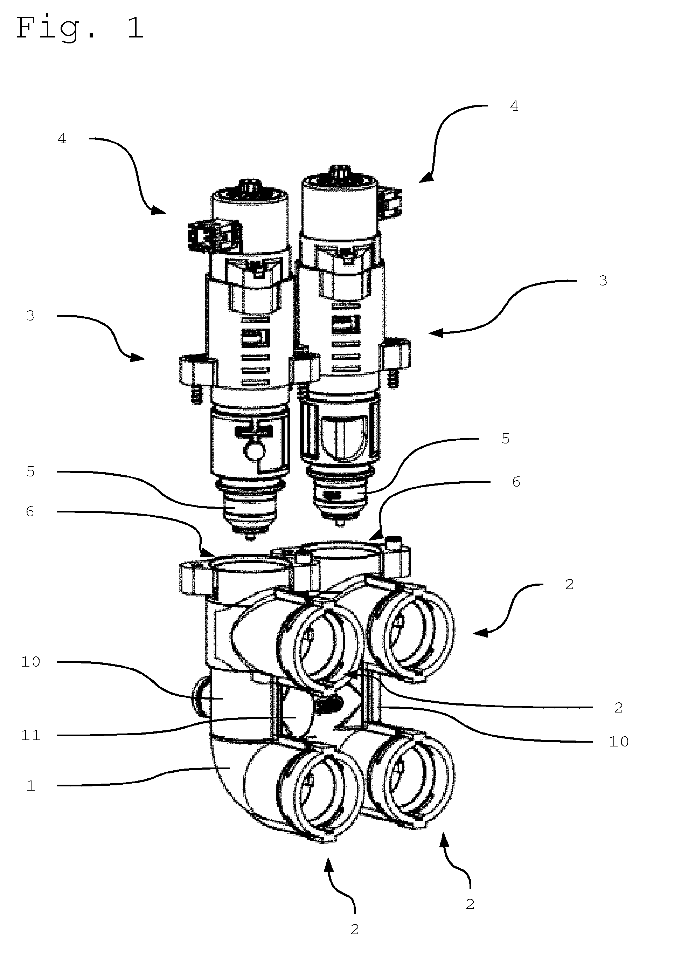

The modular valve system according to the invention, configured as a multi-way valve 9 as shown in Fig. 1, has four ports 2 for switching over between or mixing fluids. The multi-way valve 9 comprises a valve body 1 in which two valve cores 3 are arranged, each valve core 3 having at least one linear actuator 4 and one axially sealing seal element 5.

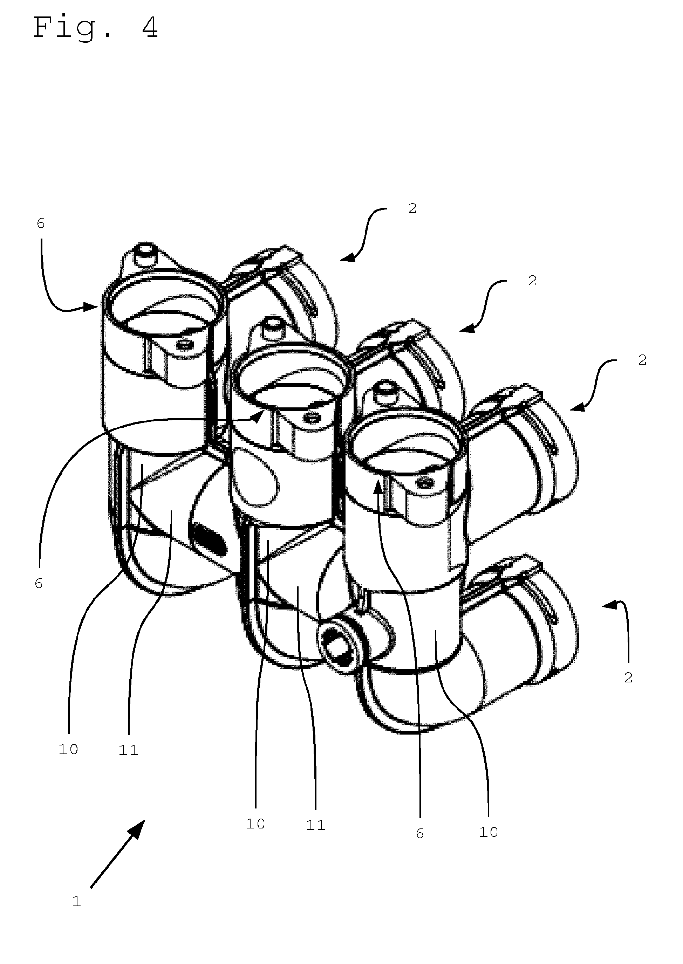

This modular valve system is arranged to be scalable so that, besides a 4-way valve as shown in Fig. 4, a 5-way, 6-way or, beyond that, a multi-way valve 9 can be provided. It is crucial here that, by means of the linearly acting actuator 4, the respective valve core 3 drives the seal element 5 which is pushed or pressed against the respective seal seat 8 in an axially sealing manner.

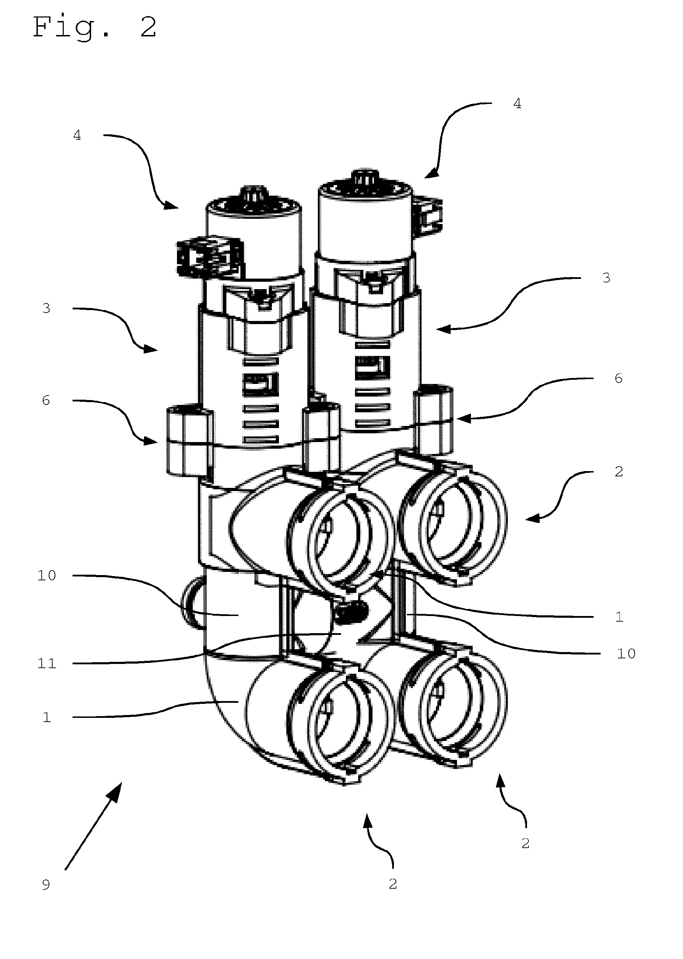

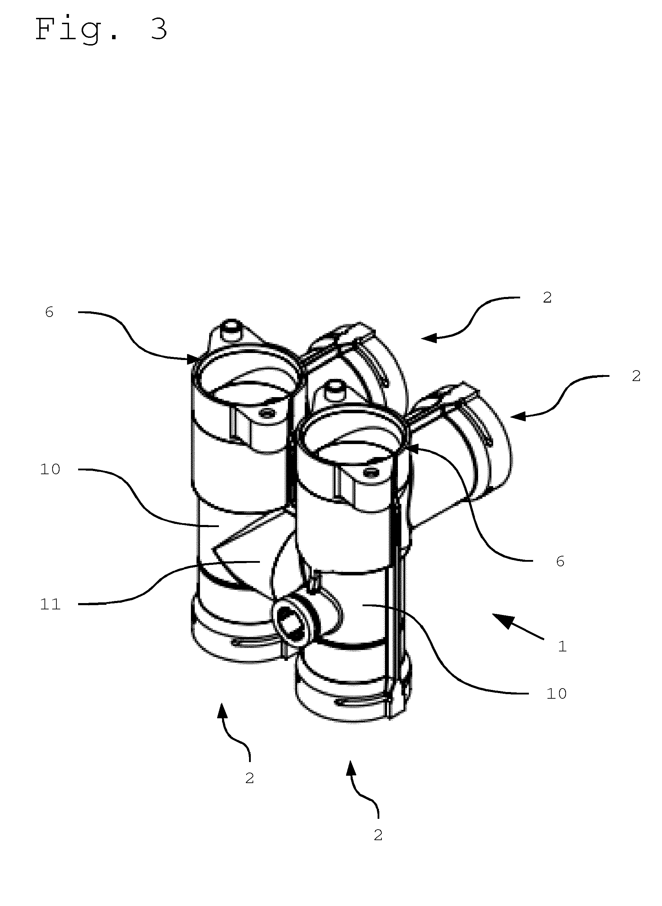

In a specific embodiment, as shown in Figures 1 to 4, the valve body comprises two parallel and spaced pipe-like sections 10. The two pipe-like sections 10 are connected by a connecting piece 11 preferably arranged at a right angle to the two pipe-like sections 10, the pipe-like sections 10 and the connecting piece 11 being initially configured to be flown through without obstruction. At each end adjacent to the two pipe-like sections 10, a valve core socket 6 is provided in which the valve core 3 as shown in Fig. 2 is inserted and fastened (for example using screw-fastening).

Two of the four ports 2 are located in the end of the pipe-like sections 10 opposite the valve core 3. As needed, the ports 2 are angled (here for example, perpendicular) or run in an axial direction of the pipe-like sections 10. The two remaining ports 2 are located at the valve core side end of the pipe-like sections 10, the ports 2 being led radially from the pipe-like sections 10 in one direction.

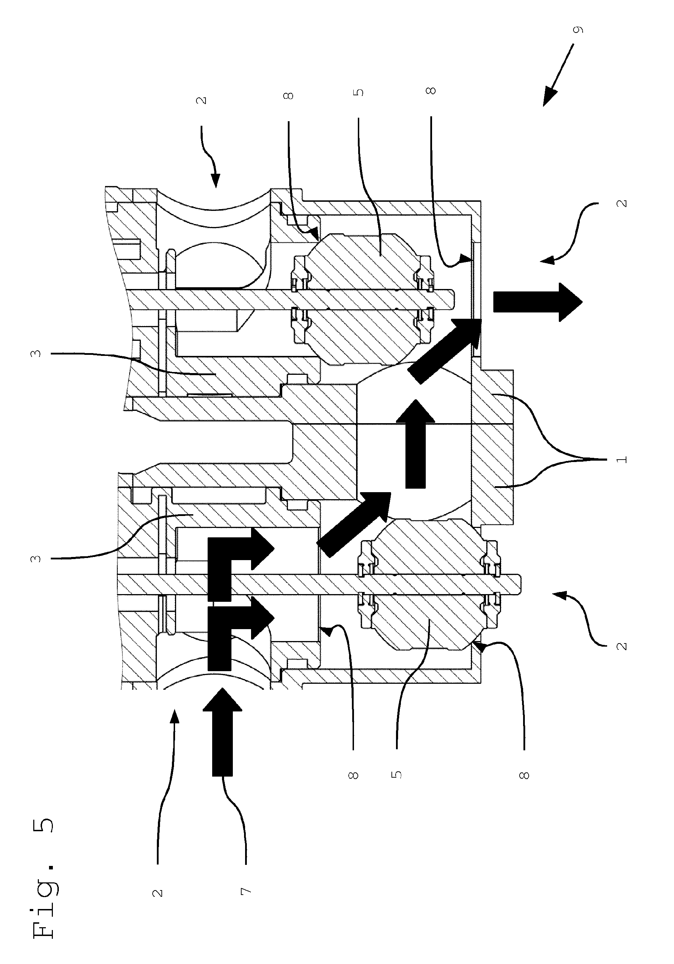

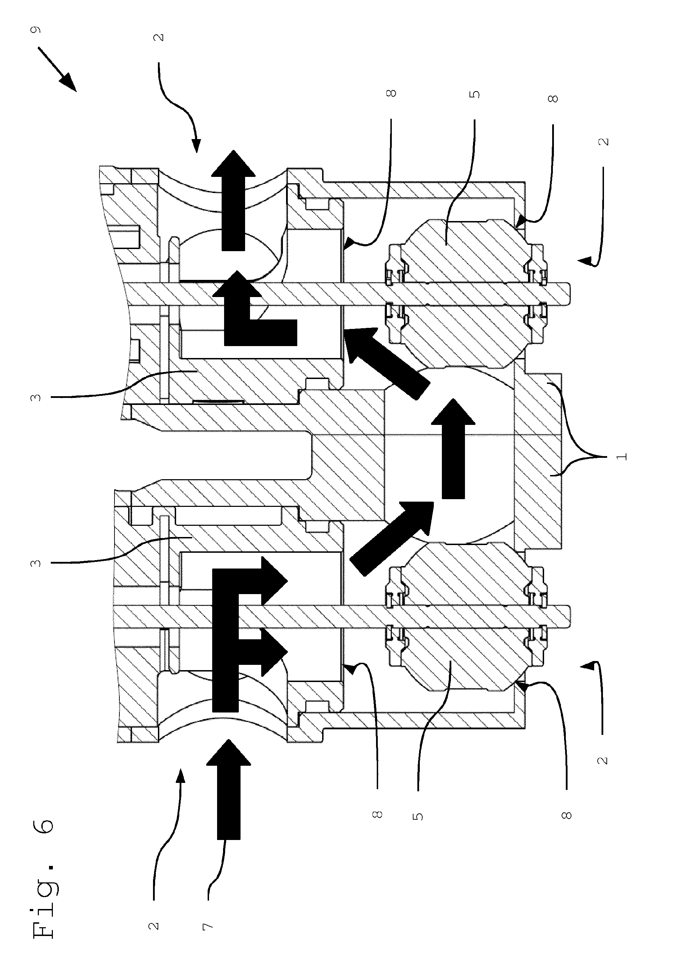

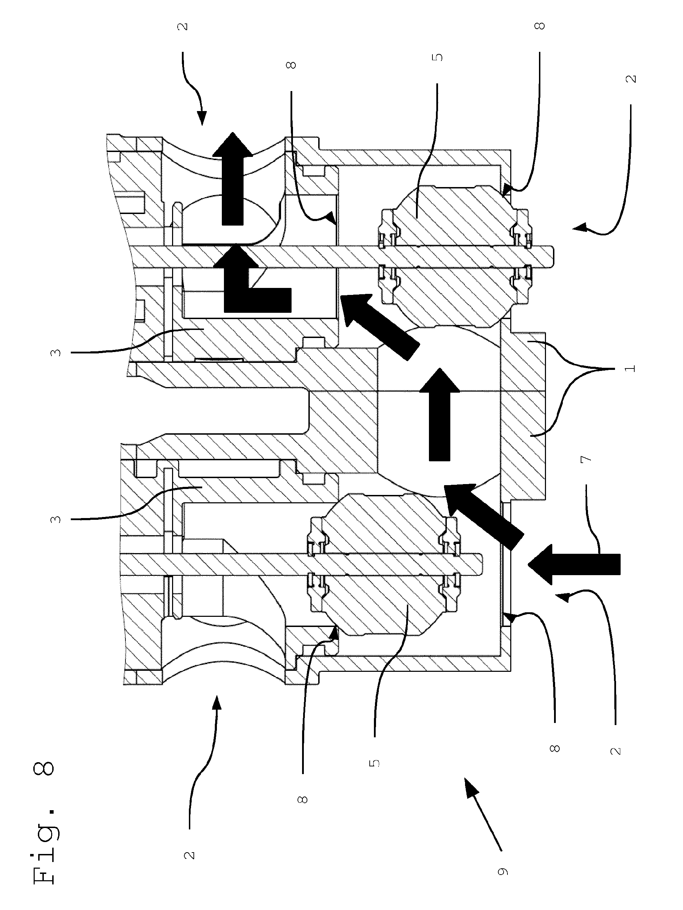

As shown in Figure 1, the valve core 3 protrudes into the respective pipe-like sections 10 beyond the ports 2 arranged in this region. As shown in Figures 5 to 9, the region of the valve cores 3 protruding into the pipe-like sections 10 has passages and passage openings matching with the ports 2 in the pipe-like sections 10 and alignable with the openings.

The axially sealing seal element 5 connected with the linearly acting actuator 4 of the valve core 3 is arranged in a central position approximately in the region of the connecting piece 11, thus allowing a mixing operation. The switch-over operation as shown in Figures 5 to 8 is achieved by the linear movement of the seal element 5 to one of the end positions at the seal seats 8. Figures 5 to 9 show the resulting fluid flow 7 depending on the mode of operation and switching state.

Due to the individually adjustable switching states and operating states of the multi-way valve 9, the ports 2 are furthermore freely controllable as inlet ports and/or outlet ports in their function and flow direction. Depending on the coupled peripheries, a direction reversal can be achieved without having to perform expensive conversion measures.

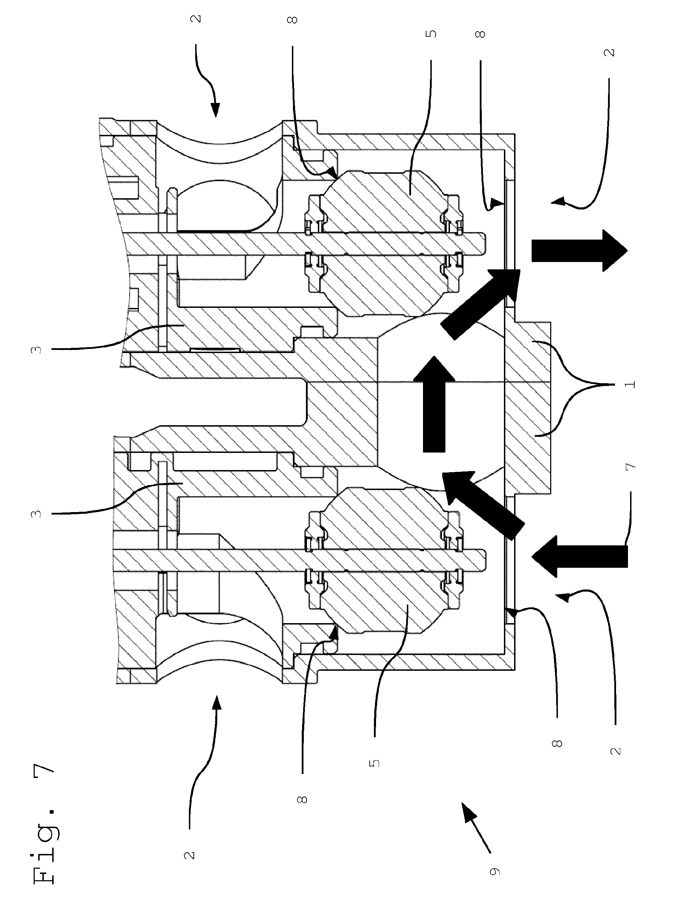

Figures 5 to 9 show different modes of operation with an indication of the flow direction 7. Thus, a port 2 defined as inlet port can be switched individually to connect to one, two or three ports defined as outlet ports. Figures 7 to 8 show the through-connection of one port 2 defined as inlet port to one other port 2 defined as outlet port, each remaining port 2 being blocked irrespective of its function as inlet or outlet port.

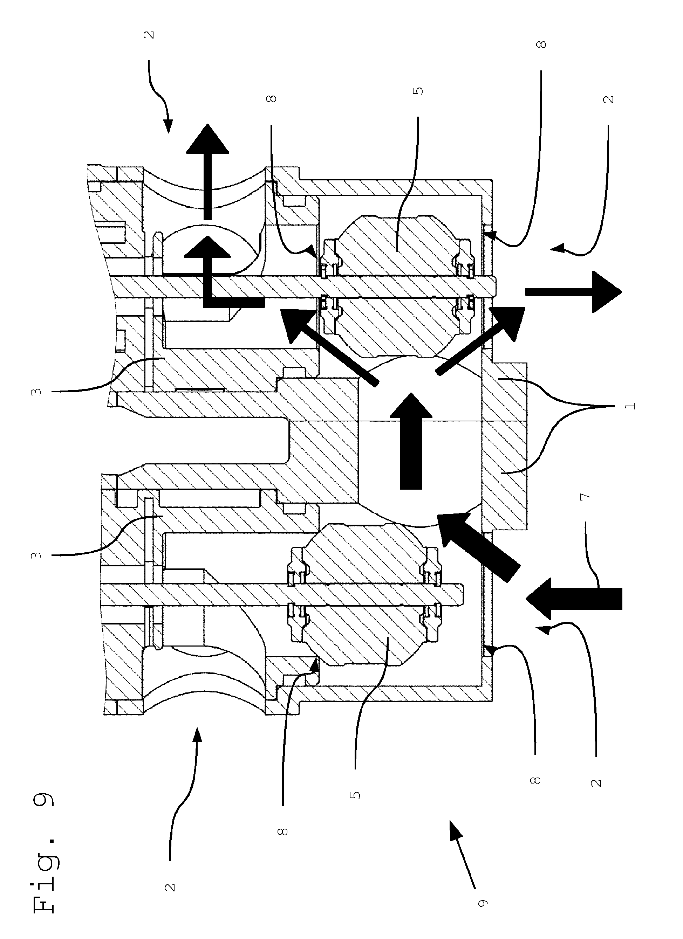

Figure 9 shows the mixing operation where a port 2 defined as inlet port and two ports 2 are simultaneously defined as outlet ports by appropriate positioning of the seal element 5.

Not shown is the mixing operation where one port 2 is defined as inlet port and, by appropriate positioning of the seal element 5, the remaining ports 2 are concurrently defined as outlet ports.

The mixing modes of operation can be freely realized irrespective of the valve system scaling.

Here, a seal seat 8 for the seal element 5 is located at the valve core end of the pipe sections 10 at the inner end of the valve core 3. The other seal seat 8 for the seal element 5 is located at the opposite end of the valve body 1. The seal element 5 is pushed or pressed against the respective seal seats 8 by the movement initiated by the linear actuator. Here the linear actuator 4 of the valve cores 3 is driven electrically, by a stepper motor and threaded spindle or fluidically. Thus, infinitely variable operation is made possible, allowing the multi-way valve 9 to be adjusted and switched very precisely and as need requires.

In a specific embodiment, the valve body 1 is made of plastics. The valve body 1 comprises individual, assembled, separable, modular extensible, adjustable, rotatable relative to one another but at the same time sealingly connected individual components, with high requirements being placed on the tightness of the individual parts. The valve body 1 can thereby be universally and individually adapted to spatial conditions. However, due to the necessary connection points, it has a slightly larger extension.

In another embodiment the valve body 1 is configured as an inseparable moulded body where a very torsionally stiff, stable and compact construction is achieved. This moulded body can preferably be made of plastics. In this embodiment the valve system is still considered to be modular as the valve cores are self-contained and replaceable or interchangeable allowing the valve body to be interchanged, in part or as in this case, as a whole.

The scalability of connections is achieved by juxtaposing several pipe-like sections 10 with connection pieces 11 arranged in between, whereby odd-numbered multi-way valves 9 can also be achieved by non-execution of a port 2 or an additionally arranged seal plug. To ensure the respective function, a valve seat 3 with a linear actuator 4 and an axially sealing seal element 5 is arranged in each pipe-like section 10. The connection to one or two ports 2 is configured in a precisely adjustable and easily switchable manner by each of the linearly driven and axially sealing seal elements 5. This allows the respective switching states to be adjusted individually and as need requires. Thus, two ports 2 can be controlled by each of the seal elements whereby the respective ports 2 can be adjusted with appropriate flexibility in any multi-way valve 9. These two ports 2 are spatially located on one axis so that the seal element 5 opens, closes or mixes the respective connection to these ports 2. The variety of combinations increases when the valve system is scaled to a multi-way valve 9 with more than four ports 2. Using this novel solution according to the invention, cascaded arrangements of valves for, e.g., highly branched heating, ventilation or cooling systems are configurable.

It is an advantage that the seal element of the linearly acting valve core is configured to be axially pushable and/or pressable onto the respective seal seat of the valve body or valve core at the respective end position. This achieves a reliable and permanent sealing action. Due to the working principle of the seal and the linear direction of operation of the seal element, there is a high level of insensitivity to contaminations.

Furthermore, the size and the cross section of the seal element 5 can be adapted. For this purpose the seal element 5 is configured to be elastically deformable. This causes the flow cross section in the valve body 1 to change. Thus, this allows an adjustment to changing fluid flows 7 or the fluid flows 7 can also be changed if a change in the position of the seal element 5 is not wanted or not possible.

It is thus further possible that specific regions or ports 2 of the multi-way valve 9 are delimited by preventing the fluid flow 7, e.g., through the connecting piece 11. The prevention of the fluid flow 7 is achieved by a volume change of the seal element. The volume change can be achieved pneumatically or hydraulically by a connection existing to the seal element 5 via the therefore hollow actuator axis and by the volume change being initiated via this connection.

A further volume change can be brought about by, e.g., a temperature-dependent volume change by means of a fluid led into the seal element.

With each appropriate seal element 5, the volume change can be spatially oriented so that specific regions of the seal element 5 are widened preferably and into a specific direction.

In the description and claims of the present application, each of the verbs "comprise", "include", "contain" and "have", and variations thereof, are used in an inclusive sense, to specify the presence of the stated item or feature but do not preclude the presence of additional items or features.

It is appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable sub-combination.

The embodiments described above are provided by way of example only, and various other modifications will be apparent to persons skilled in the field without departing from the scope of the invention as defined by the appended claims.

## Claims

1. A modular valve system configured as a multi-way valve (9) having a valve body (1) and at least four ports (2) for switching over between or mixing fluids,
**characterized in that** at least two valve cores (3) are arranged in the valve body (1); and
each valve core (3) has at least one linear actuator (4) and one axially sealing seal element (5).

2. A valve system according to Claim 1,
wherein the valve body (1) comprises separable, modularly extensible, adjustable and/or, relative to one another, rotatable individual components.

3. A valve system according to Claim 1,
wherein the valve body (1) is configured as an inseparable moulded body.

4. A modular valve system according to Claim 1, 2 or 3,
wherein a switch-over operation and/or an infinitely variable mixing function is adjustable by means of the arranged valve cores (3).

5. A modular valve system according to any one of the previous claims,
wherein the ports (2) are configured to be freely controllable as inlet ports and/or outlet ports in their function and flow direction (7).

6. A modular valve system according to any one of the previous claims,
wherein the seal element (5) is elastically deformable.
